# EUROPEAN PATENT SPECIFICATION

(11) **EP 2 259 598 B1**
(45) Date of publication and mention of the grant of the patent: **06.03.2013**
(21) Application number: 10004985.7
(22) Date of filing: 11.05.2010
(51) Int. Cl.: H04N 13/04

(54) **Stereoscopic display and stereoscopic display method**
Stereoskopische Anzeige und stereoskopisches Anzeigeverfahren
Affichage stéréoscopique et procédé d'affichage stéréoscopique

(30) Priority: 29.05.2009 JP 2009130912
(43) Date of publication of application: 08.12.2010
(73) Proprietor: Sony Corporation, Tokyo 108-0075 (JP)
(72) Inventor: Yanamoto, Kaoru, Tokyo 108-0075 (JP)
(74) Representative: Müller - Hoffmann & Partner

(56) References cited:
- EP-A2- 1 742 492
- EP-A2- 1 777 575
- US-B1- 6 476 850
- HYO JIN LEE ET AL: "8.2: A High Resolution Autostereoscopic Display Employing a Time Division Parallax Barrier" SID 2006, 2006 SID INTERNATIONAL SYMPOSIUM, SOCIETY FOR INFORMATION DISPLAY, vol. XXXVII, 24 May 2005 (2005-05-24), pages 81-83, XP007012631 ISSN: 0006-966X

## Description

### BACKGROUND

The present disclosure relates to a stereoscopic display and a stereoscopic display method which are allowed to achieve stereoscopic display by a parallax barrier system.

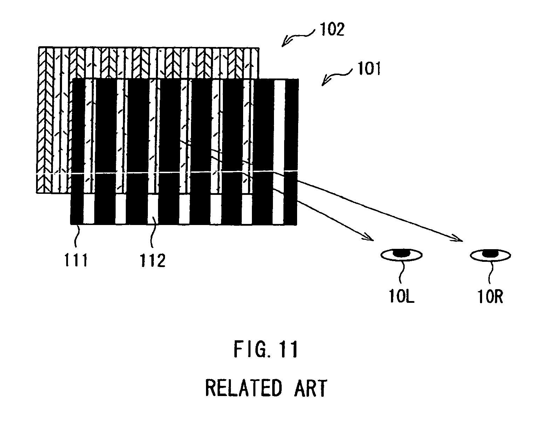

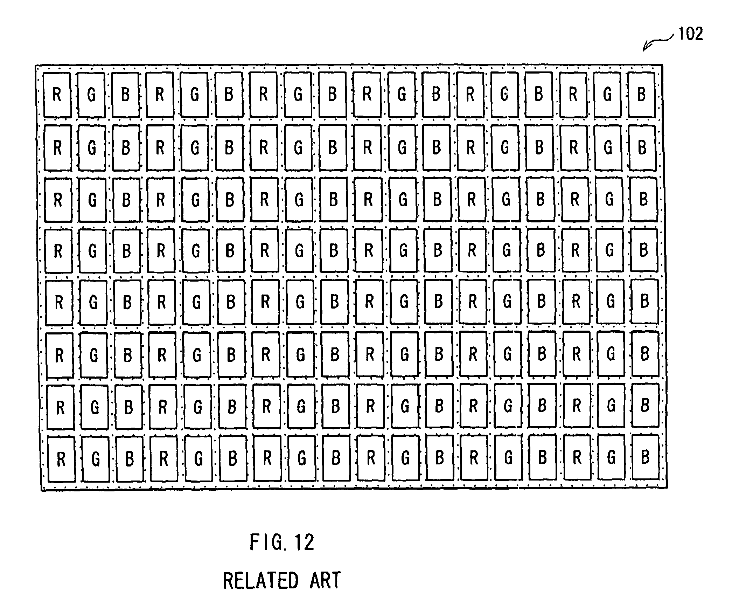

In related art, as one of stereoscopic display systems which are allowed to achieve stereoscopic vision with naked eyes without wearing special glasses, a parallax barrier system or lenticular system stereoscopic display is known. FIG. 11 illustrates a typical configuration example of the parallax barrier system stereoscopic display. In the stereoscopic display, a parallax barrier 101 is arranged so as to face a front surface of a two-dimensional display panel 102. In a typical configuration of the parallax barrier 101, shielding sections 111 shielding display image light from the two-dimensional display panel 102 and stripe-shaped slit sections 112 allowing the display image light to pass therethrough are alternately arranged in a horizontal direction. As the two-dimensional display panel 102, a two-dimensional display panel with a pixel configuration in which a plurality of pixels configured of sub-pixels of a plurality of colors (R, G and B) are two-dimensionally arranged is used. For example, as illustrated in FIG. 12, a pixel arrangement in which sub-pixels of different colors are periodically arranged in lines in a horizontal direction, and sub-pixels of the same color are arranged in one line in a vertical direction is used.

In the parallax barrier system or lenticular system stereoscopic display, a plurality of parallax images including different parallax information, respectively, are prepared, and, for example, each of the parallax images are separated into a plurality of stripe-shaped separated images extending in a vertical direction. Then, the separated images of the plurality of parallax images are alternately arranged in a horizontal direction so as to produce a composite image including a plurality of stripe-shaped parallax images in one screen, and the composite image is displayed on the two-dimensional display panel 102. In the case of the parallax barrier system, the composite image displayed on the two-dimensional display panel 102 is viewed through the parallax barrier 101. When the widths of the separated images to be displayed, a slit width in the parallax barrier 101 and the like are appropriately set, in the case where a viewer watches the stereoscopic display from a predetermined position and a predetermined direction, light rays from different parallax images are allowed to enter into right and left eyes 10R and 10L of the viewer, respectively, through the slit sections 112. Thus, when the viewer watches the stereoscopic display from a predetermined position and a predetermined direction, a stereoscopic image is perceived.

To achieve stereoscopic vision, it is necessary for the right and left eyes 10R and 10L to view different parallax images, respectively, so two or more parallax images, that is, an image for right eye and an image for left eye are necessary. In the case where three or more parallax images are used, multi-view vision is achievable. When more parallax images are used, stereoscopic vision in response to changes in viewing position of the viewer is achievable. That is, motion parallax is obtained.

In both cases of a parallax barrier system and a lenticular system, images of which the number is equal to the number of parallaxes are spatially separated and displayed in one screen, so compared to the case where two-dimensional display is performed, resolution is reduced by a factor of the number of parallaxes. Japanese Patent No. 3096613 discloses an invention for improving resolution by alternately displaying images for right eye and images for left eye in both of a horizontal direction and a vertical direction in a parallax barrier system stereoscopic display. However, the fact remains that the images for right eye and the images for left eye are spatially separated and displayed, so resolution is still reduced. There is disclosed an invention in which optimum stereoscopic vision corresponding to a viewing position is achievable in a parallax barrier system stereoscopic display by dynamically changing a barrier pattern of a parallax barrier depending on the viewing position in "Advances in the Dynallax Solid-State Dynamic Parallax Barrier Autostereoscopic Visualization Display System" Peterka, T.; Kooima, R.L.; Sandin, D.J.; Johnson, A.; Leigh, J.; DeFanti, T.A. Visualization and Computer Graphics, IEEE Transactions on Volume 14, Issue 3, May/June 2008 Page(s):487-499. However, vision corresponding to the viewing position is allowed to be improved, but resolution is not improved.

It is therefore desirable to provide a stereoscopic display and a stereoscopic display method which are allowed to prevent a decline in resolution during stereoscopic display by a parallax barrier system.

In EP 1 777 575 A2 a system and a respective method for driving a stereoscopic image display device are known. During a first period wherein no image is displayed, a first data signal is written, which corresponds to a first image on a first display cell and a second data signal is written, which corresponds to a second image on the second display cell. During a second period, the first image and the second image are displayed by driving the barrier to become a first format. During a third period in which no image is displayed, the second data signal is written on the first display cell and the first data signal is written on the second display cell. During a fourth period, the first and second images are displayed by driving the barrier to become a second format.

In Hyo Jin Lee et al.: "8.2: A high resolution autostereoscopic display employing a time division parallax barrier", SID 2006, 2006 SID International Symposium Society of Information Display, Vol. XXXVII, 2005-05-24, pages 81 - 83, XP007012631. ISSN:0006-966X, an autostereoscopic 3D display device is described.

From EP 1 742 492 A2 a high resolution 2D-3D switchable autostereoscopic display apparatus is known which includes a backlight unit emitting light, a polarizer sheet changing the light emitted from the backlight unit so that the light has only a specific polarization direction, a polarization switch converting the direction of the polarization of incident light, a birefringent element array comprising a plurality of alternating first and second birefringent elements and changing the polarization direction of incident light so that the polarization of light transmitted by the first birefringent elements is perpendicular to the polarization of light transmitted by the second birefringent elements, a lenticular lens sheet separating and emitting incident light to a first eye viewing zone and a second eye viewing zone, and a display panel displaying an image.

US 6,476,850 B1 discloses an apparatus for the generation of a full-spectrum stereoscopic display, using a masking screen comprised of a plurality of vertical apertures arranged in front of, parallel, and in a geometric relation to an image display screen. The image has two viewpoints interlaced by alternate vertical rows of pixels. The system creates a full-spectrum stereoscopic display when the image is viewed with proper geometric alignment by a viewer through the vertical apertures of the masking screen, which effectively separates the alternating left-eye/right-eye viewpoint vertical rows of pixels in such a manner as to allow the right eye to only see the right-eye viewpoint and the left eye to only see the left-eye viewpoint.

The above objects are solved by the claimed matter according to the independent claims.

### SUMMARY

In the stereoscopic display and the stereoscopic display method according to an embodiment, the parallax images are combined into a one-screen image according to a predetermined pattern while maintaining such a state that the parallax images are spatially separated from each other, and the display pattern configured of the parallax images are displayed while periodically switching different display patterns from one to another. In other words, the parallax images which are spatially and temporally separated from each other are displayed on the two-dimensional display section. The switching timing of the barrier pattern and the switching timing of the display pattern are synchronized so that stereoscopic vision is achievable.

In the stereoscopic display and the stereoscopic display method according to an embodiment, the display pattern configured of the parallax images is periodically switched, and the barrier pattern is periodically switched in synchronization with periodically switching the display pattern, so the parallax images which are spatially and temporally separated are displayed on the two-dimensional display section so that stereoscopic display is achievable. Thereby, compared to the case where the parallax images which are spatially separated are displayed in one display pattern, a decline in resolution in stereoscopic display is preventable.

In an embodiment, a display device includes a two-dimensional display section configured to display parallax images for stereoscopic display, a variable parallax barrier configured to form a plurality of different barrier patterns, each barrier pattern having light transmitting portions and light blocking portions, and at least one timing controller for controlling a first switching operation in the two-dimensional display section and a second switching operation in the variable parallax barrier.

In an embodiment, a display device includes a liquid crystal display panel configured to display parallax images for stereoscopic display, a variable parallax barrier configured to form a plurality of different barrier patterns, each barrier pattern having light transmitting portions and light blocking portions, at least one timing controller for controlling a first switching operation in the liquid crystal display panel and a second switching operation in the variable parallax barrier, and a backlight configured to emit light through the liquid crystal display panel and the variable parallax barrier.

In another embodiment, a method of displaying a stereoscopic image includes displaying parallax images for stereoscopic display with a two-dimensional display section, forming a plurality of different barrier patterns with a variable parallax barrier, each barrier pattern having light transmitting portions and light blocking portions, and controlling a first switching operation in the two-dimensional display section and a second switching operation in the variable parallax barrier.

In another embodiment, a method of displaying a stereoscopic image, the method includes displaying parallax images for stereoscopic display with a liquid crystal display panel, forming a plurality of different barrier patterns with a variable parallax barrier, each barrier pattern having light transmitting portions and light blocking portions, controlling a first switching operation in the liquid crystal display panel and a second switching operation in the variable parallax barrier, and emitting light from a backlight through the liquid crystal display panel and the variable parallax barrier.

Additional features and advantages are described herein, and will be apparent from the following Detailed Description and the figures.

### BRIEF DESCRIPTION OF THE FIGURES

FIG. 1 is a configuration diagram of a stereoscopic display according to a first embodiment.

FIG. 2 is a block diagram illustrating a circuit responsible for display control in the stereoscopic display according to the first embodiment.

FIG. 3 is a plan view illustrating a pixel arrangement of a liquid crystal display panel in the stereoscopic display according to the first embodiment.

FIG. 4 is a plan view illustrating a first barrier pattern and a second barrier pattern in the stereoscopic display according to the first embodiment, respectively.

FIG. 5 is a plan view illustrating a first display pattern and a second display pattern of a parallax image in the stereoscopic display according to the first embodiment, respectively.

FIG. 6 is a plan views illustrating a first parallax image viewed through the first barrier pattern in a first display period and the first parallax image viewed through the second barrier pattern in a second display period in the stereoscopic display according to the first embodiment, respectively.

FIGs. 7A and 7B are schematic explanatory diagrams illustrating a state where stereoscopic vision is achieved in the first display period and a state where stereoscopic vision is achieved in the second display period in the stereoscopic display according to the first embodiment, respectively.

FIG. 8 is a timing chart in the stereoscopic display according to the first embodiment, a part A in FIG. 8 illustrates transition of a display pattern in an arbitrary pixel position, and a part B in FIG. 8 illustrates transition of a barrier pattern in a position corresponding to the pixel position in the part A in FIG. 8.

FIG. 9 is a block diagram illustrating a circuit responsible for display control in a stereoscopic display according to a second embodiment.

FIG. 10 is a timing chart in the stereoscopic display according to the second embodiment, a part A in FIG. 10 illustrates transition of a display pattern in an arbitrary pixel position, a part B in FIG. 10 illustrates transition of a barrier pattern in a position corresponding to the pixel position in the part A in FIG. 10, and a part C in FIG. 10 illustrate transition of a lighting pattern of a backlight.

FIG. 11 is a configuration diagram illustrating a typical configuration example of a parallax barrier system stereoscopic display.

FIG. 12 is a plan view illustrating an example of a typical pixel arrangement of a two-dimensional display panel.

### DETAILED DESCRIPTION

Preferred embodiments will be described in detail below referring to the accompanying drawings.

### First Embodiment

### Configuration of stereoscopic display

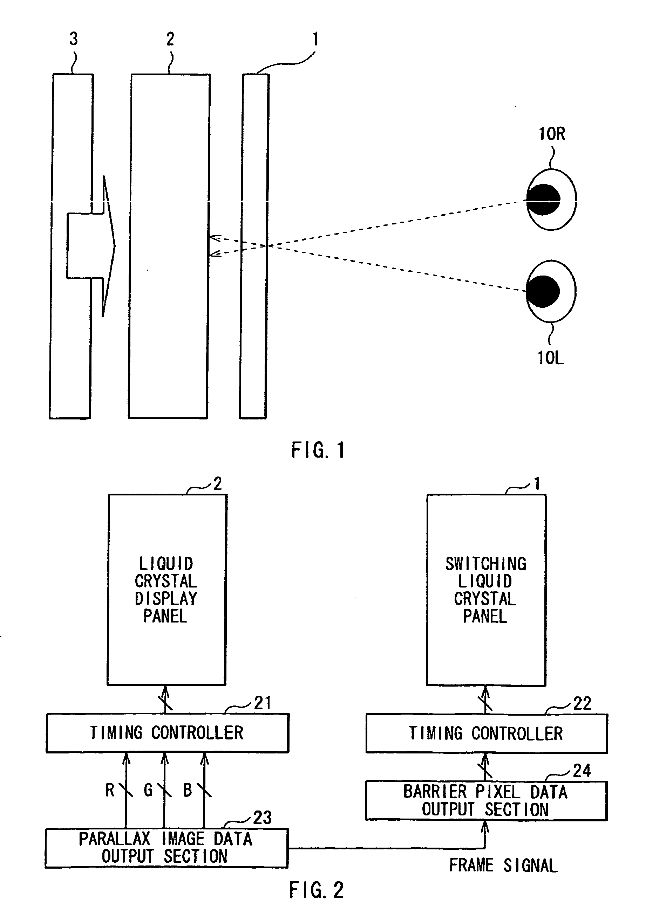

FIG. 1 illustrates a whole configuration example of a stereoscopic display according to a first embodiment. FIG. 2 illustrates a circuit responsible for display control in the stereoscopic display. As illustrated in FIG. 1, the stereoscopic display includes a liquid crystal display panel 2, a backlight 3 arranged on a back surface of the liquid crystal display panel 2, and a switching liquid crystal panel 1 arranged so as to face a display surface of the liquid crystal display panel 2. As illustrated in FIG. 2, the stereoscopic display further includes a timing controller 21 for controlling a display operation in the liquid crystal display panel 2 and a parallax image data output section 23. Moreover, the stereoscopic display includes a timing controller 22 for controlling a switching operation in the switching liquid crystal panel 1 and a barrier pixel data output section 24.

In the embodiment, the liquid crystal display panel 2 and the backlight 3 correspond to specific examples of "a two-dimensional display section." Moreover, the switching liquid crystal panel 1 corresponds to a specific example of "a variable parallax barrier." The timing controllers 21 and 22 correspond to specific examples of "a synchronization control section" in the invention.

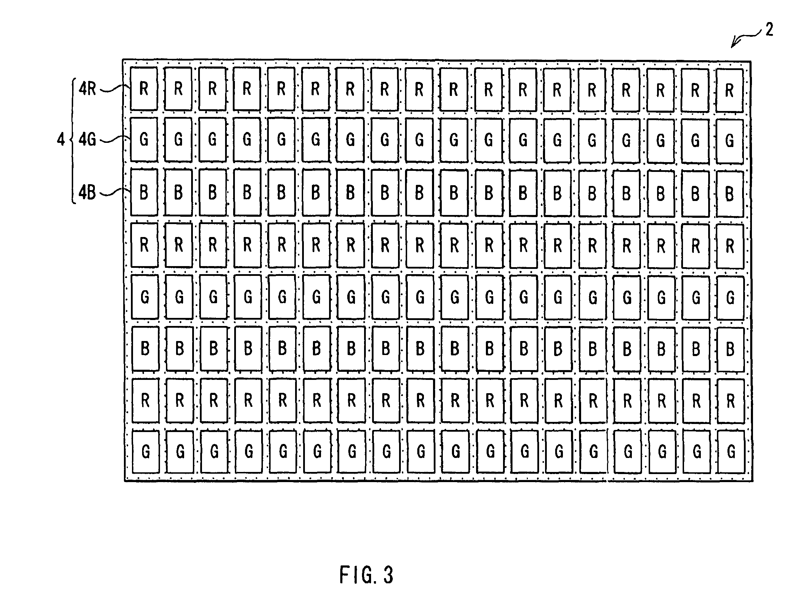

FIG. 3 illustrates an example of a pixel configuration of the liquid crystal display panel 2. The liquid crystal display panel 2 has a pixel configuration in which a plurality of sub-pixels 4R, 4G and 4B of three colors R (red), G (green) and B (blue) necessary for color display are two-dimensionally arranged. In an configuration example in FIG. 3, a combination of sub-pixels 4R, 4G and 4B of the three color connected to one another in a longitudinal direction constitutes a unit pixel (1 pixel) 4. As illustrated in FIG. 3, a pixel arrangement in which sub-pixels of different colors are periodically arranged in lines in a vertical direction (a longitudinal direction) and sub-pixels of the same color are arranged in one line in a horizontal direction (a transverse direction) is used. The liquid crystal display panel 2 two-dimensionally displays an image by modulating light emitted from the backlight 3 in each of the sub-pixels in such a pixel configuration. The liquid crystal display panel 2 displays parallax images for stereoscopic display outputted from the parallax image data output section 23 in response to control by the timing controller 21.

In addition, to achieve stereoscopic vision, it is necessary for a right eye 10R and a left eye 10L to view different parallax images, respectively, so two parallax images, that is, an image for right eye and an image for left eye, or more parallax images are necessary. In the case where three or more parallax images are used, multi-view vision is achievable. In the embodiment, description will be given referring to a display example by a binocular system using two parallax images.

The liquid crystal display panel 2 combines two parallax images for right eye and left eye into a one-screen image according to a predetermined display pattern, and displays the display pattern configured of the parallax images. The liquid crystal display panel 2 displays the display pattern configured of the two parallax images while periodically switching two different kinds of display patterns, in which the display positions of the two parallax images are different, from one to the other. Image data corresponding to each display pattern is outputted from the parallax image data output section 23. The timing controller 21 controls a timing of displaying each of the display patterns.

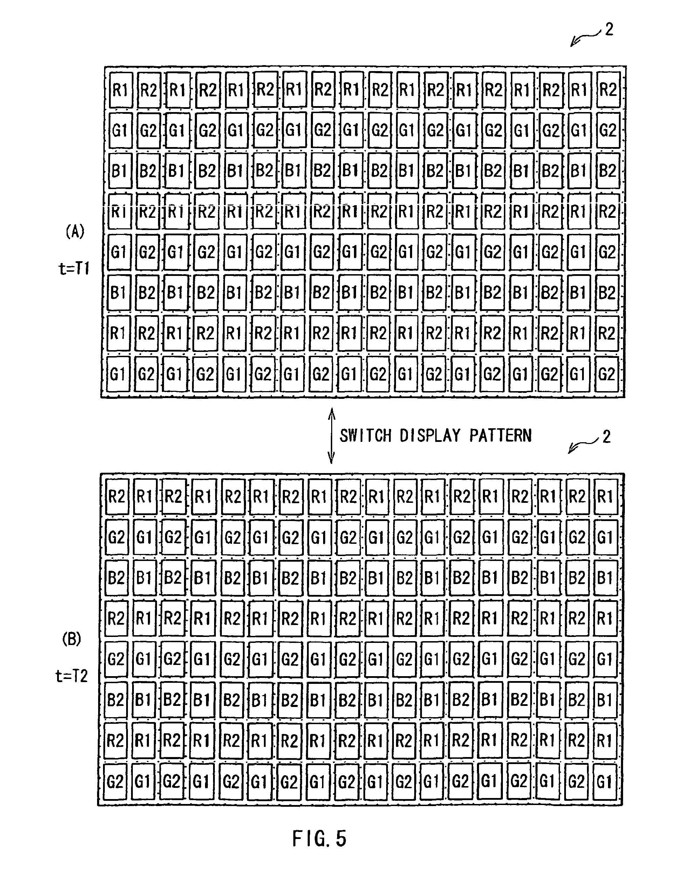

FIG. 5 illustrates an example of the two display patterns. In this case, in FIG. 5, pixels (R1, G1, B1) are pixels for displaying a first parallax image (for example, an image for right eye), and pixels (R2, G2, B2) are pixels for displaying a second parallax image (for example, an image for left eye). In both of parts A and B in FIG. 5, stripe-shaped first parallax images and stripe-shaped second parallax images extending in a longitudinal direction are alternately arranged in a horizontal direction. However, the first second parallax images and the second parallax images exchange display pixel positions with each other between the first display pattern in the part A in FIG. 5 and the second display pattern in the part B in FIG. 5. For example, the pixels (R1, G1, B1) to which the first parallax images are allocated in the first display pattern in the part A in FIG. 5 are changed to the pixels (R2, G2, B2) in the second display pattern in the part in FIG. 5, and the second parallax images are allocated to the pixels (R2, G2, B2).

The switching liquid crystal panel 1 includes a plurality of pixels which are two-dimensionally arranged, and is allowed to perform a switching operation of switching each of the pixels between a state where the pixel allows light to pass therethrough and a state where the pixel does not allow light to pass therethrough. The switching liquid crystal panel 1 achieves a function as a variable parallax barrier. The switching liquid crystal panel 1 forms a barrier pattern for optically separating each of the parallax images displayed on the liquid crystal display panel 2 so as to allow stereoscopic vision. The switching liquid crystal panel 1 forms two kinds of barrier patterns corresponding to two display patterns of the parallax images illustrated in FIG. 5 by periodically switching two states of the barrier pattern.

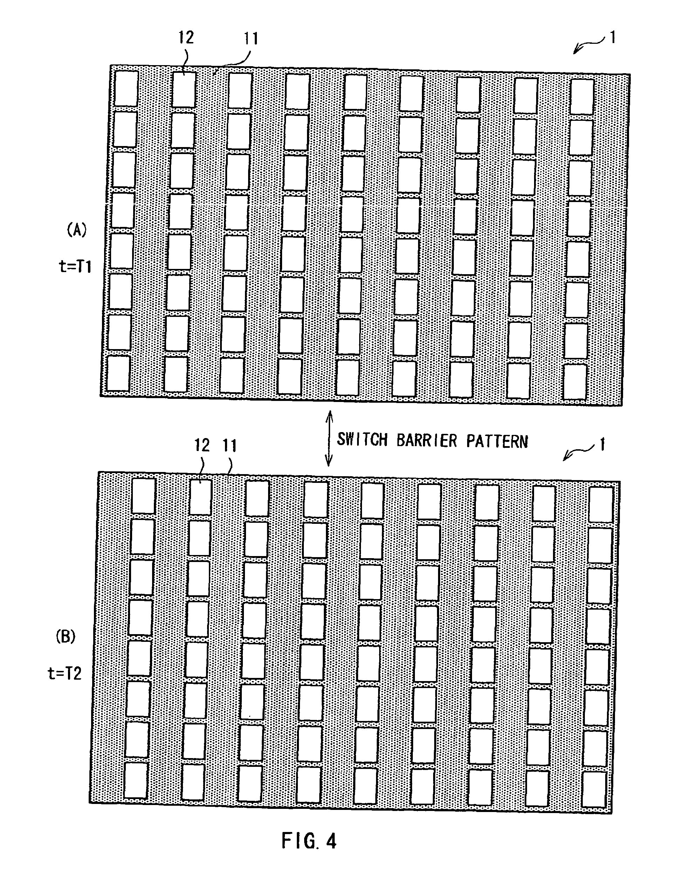

FIG. 4 illustrates examples of the two barrier patterns. The barrier patterns are patterns each including a shielding section 11 shielding display image light from the liquid crystal display panel 2 and a slit section 12 allowing the display image light to pass therethrough. A part in FIG. 4 illustrates a first barrier pattern corresponding to the first display pattern in the part A in FIG. 5, and a part B in FIG. 4 illustrates a second barrier pattern corresponding to the second display pattern in the part B in FIG. 5. In other words, the first barrier pattern optically separates the display image light so as to allow stereoscopic vision when the parallax images in the first display pattern are displayed. The second barrier pattern optically separates the display image light so as to allow stereoscopic vision when the parallax images in the second display pattern are displayed. The shape of the slit section 12 in each of the barrier patterns is set to an appropriate shape for allowing light rays from different parallax images to enter into right and left eyes 10R and 10L of a viewer, respectively, when the viewer watches the stereoscopic display from a predetermined position and a predetermined direction.

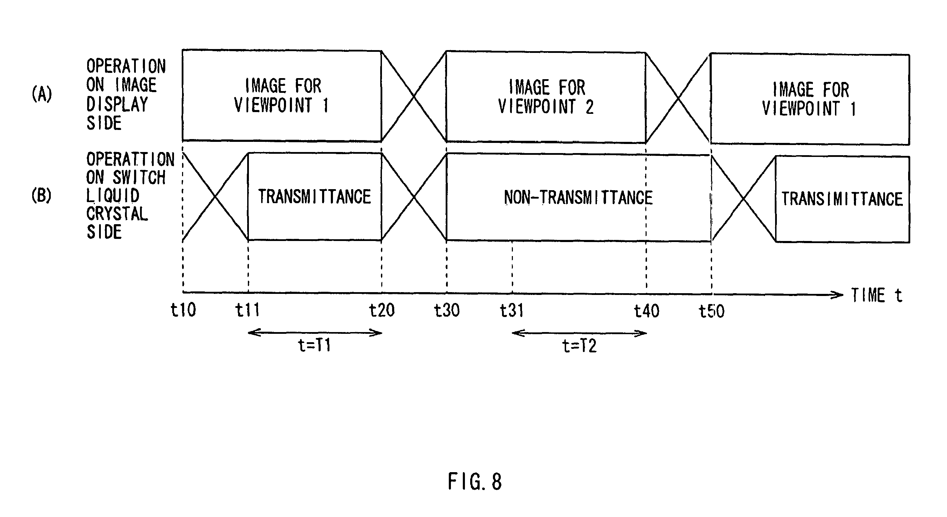

Pixel data for forming each of the barrier patterns in the switching liquid crystal panel 1 is outputted from the barrier pixel data output section 24. The timing controller 22 controls, based on a frame signal, a timing of forming each of the barrier patterns in the switching liquid crystal panel 1 (a timing of changing each pixel into the state where the pixel allows light to pass therethrough or the state where the pixel does not allow light to pass therethrough). Image data of each of the display patterns displayed on the liquid crystal display panel 2 is outputted from the parallax image data output section 23, and a frame signal obtained at the time of switching the display pattern is outputted to the timing controller 22 through the barrier pixel data output section 24. The timing controller 22 performs synchronous control to synchronize a switching timing of the barrier pattern and a switching timing of the display pattern in the liquid crystal display panel 2. In addition, as will be described later referring to FIG. 8, synchronous control is preferably performed by the timing controller 22 in consideration of a difference in liquid crystal response speed between the liquid crystal panel 1 and the liquid crystal display panel 2.

### Operation of stereoscopic display

In the stereoscopic display, in the liquid crystal display panel 2, parallax images are combined into a one-screen image according to a predetermined pattern while maintaining such a state that the parallax images are spatially separated from each other, and the parallax images are displayed while periodically switching the display pattern. In other words, the parallax images which are spatially and temporally separated are displayed on the liquid crystal display panel 2. In the switching liquid crystal panel 1, different barrier patterns are periodically switched from one to another in synchronization with switching the display pattern so as to provide stereoscopic vision.

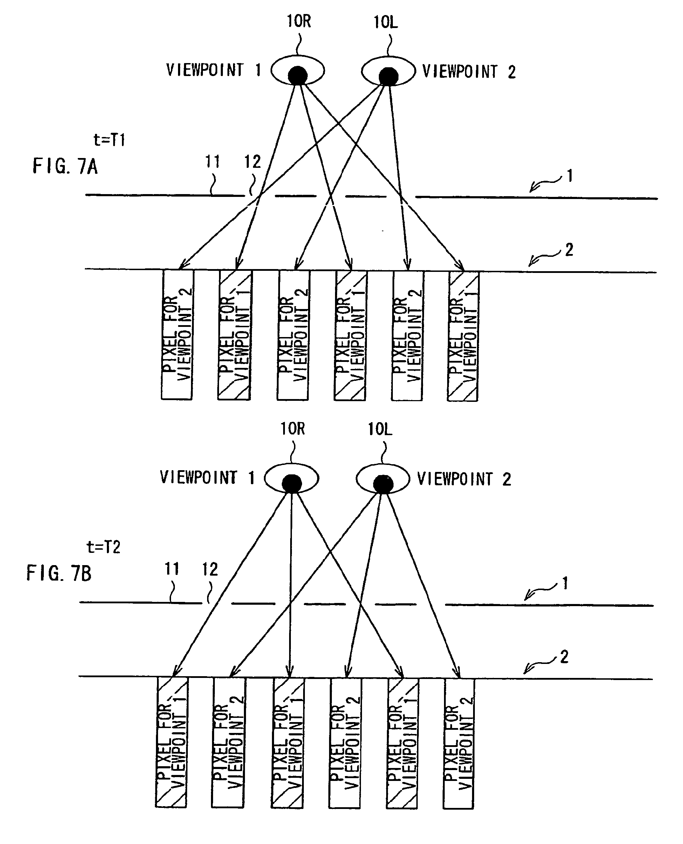

FIG. 7A schematically illustrates a state where stereoscopic vision is achieved in a first display period T1. FIG. 7B schematically illustrates a state where stereoscopic vision is achieved in a second display period T2 which is different from the first display period T1. In the first display period T1, the first display pattern (refer to the part A in FIG. 5) is displayed on the liquid crystal display panel 2, and the first barrier pattern (refer to the part A in FIG. 4) is formed on the switching liquid crystal panel 1. In the second display period T2, the second display pattern (refer to the part B in FIG. 5) is displayed on the liquid crystal display panel 2, and the second barrier pattern (refer to the part B in FIG. 4) is formed on the switching liquid crystal panel 1.

In FIGs. 7A and 7B, the right eye 10R and the left eye 10L of the viewer are defined as viewpoints 1 and 2, respectively. In the first display period T1, first parallax images (images for right eye) and second parallax images (images for left eye) are alternately allocated to pixels (refer to (R1, G1, B2) in the part A in FIG. 5) for the viewpoint 1 and pixels (refer to (R2, G2, B2) in the part A in FIG. 5) for the viewpoint 2 according to the first display pattern, and then displayed on the liquid crystal display panel 2. When such displayed images are viewed through the first barrier pattern formed by the switching liquid crystal panel 1, the right eye 10R perceives only light from the first parallax images, and the left eye 10L perceives only light from the second parallax images. Thereby, a stereoscopic image based on the first parallax images and the second parallax images is perceived in the first display period T1.

In the second display period T2, the first parallax images and the second parallax images are alternately allocated to pixels (refer to (R1, G1, B1) in the part B in FIG. 5) for the viewpoint 1 and pixels (refer to (R2, G2, B2) in the part B in FIG. 5) for the viewpoint 2 according to the second display pattern, and then displayed on the liquid crystal display panel 2. When such displayed images are viewed through the second barrier pattern formed by the switching liquid crystal panel 1, the right eye 10R perceives only light from the first parallax images, and the left eye 10L perceives only light from the second parallax images. Thereby, also in the second display period T2, a stereoscopic image based on the first parallax images and the second parallax images are perceived.

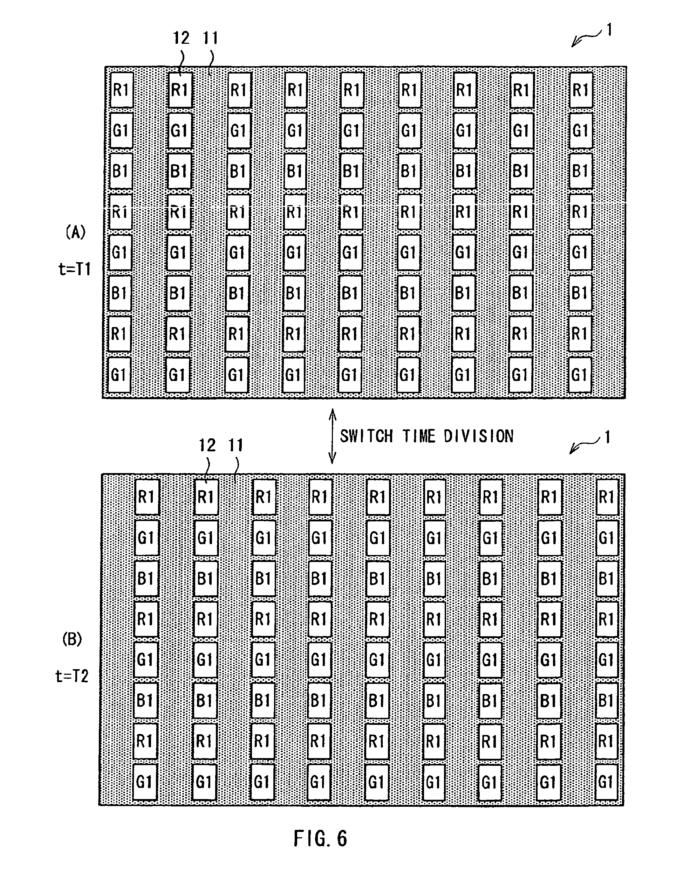

A part A in FIG. 6 illustrates the first parallax images viewed by the right eye 10R of the viewer through the first barrier pattern in the first display period T1. A part B in FIG. 6 illustrates the first parallax images viewed by the right eye 10R of the viewer through the second barrier pattern in the second display period T2. As a result, the first parallax images are displayed using all pixels on the liquid crystal display panel 2 through the first display period T1 and the second display period T2. Therefore, when the first parallax images are displayed, a decline in spatial resolution is prevented. The same holds true for the second parallax images viewed by the left eye 10L.

In general, there is a difference in response speed of liquid crystal between the liquid crystal display panel 2 for displaying an image and the switching liquid crystal panel 1 for simply controlling switching between transmission and non-transmission, and the response speed of liquid crystal in the liquid crystal display panel 2 is slower. Therefore, in the case where a switching timing of the display pattern in the liquid crystal display panel 2 and a switching timing of the barrier pattern in the switching liquid crystal panel 1 are synchronized, synchronous control based on a difference in response speed is preferably performed.

FIG. 8 illustrates a timing chart, and a part A in FIG. 8 illustrates transition of a display pattern in an arbitrary pixel position in the liquid crystal display panel 2 and a part B in FIG. 8 illustrates transition of a barrier pattern in a position corresponding to the pixel position in the part A in FIG. 8 in the switching liquid crystal panel 1. In a first pixel position, at a first timing, a first region on the switching liquid crystal panel 1 is turned into a transmittance state (the slit section 12) so that a pixel for the viewpoint 1 is shown to the viewpoint 1. At the next timing, that is, a second timing, the first region on the switching liquid crystal panel 1 is turned into a non-transmittance state (the shielding section 11). At this time, the first pixel position is changed to a pixel for the viewpoint 2.

In this case, as illustrated in the part A in FIG. 8, in the first pixel position on the liquid crystal display panel 2, an image for the viewpoint 1 is displayed in a period from a time t10 to a time t20, and an image for the viewpoint 2 is displayed in the next period, that is, a period from a time t30 to a time t40. The image for the viewpoint 1 starts to be displayed at the time t10, but the image starts to be displayed with full stability from a time t11 which is behind the time t10 by a predetermined period due to the response speed of liquid crystal. As illustrated in the part B in FIG. 8, synchronous control is performed so that the first region on the switching liquid crystal panel 1 is turned into the transmittance state at the time t11 at which the image is stably displayed. In the next period from the time t30 to the time t40, synchronous control is performed so that the first region on the switching liquid crystal panel 1 is turned into the non-transmittance state at the time t30 without setting a delay period.

Thus, in the case of switching the barrier pattern, a switching timing of the barrier pattern so that the shielding section 11 is turned into the slit section 12 is delayed as compared to a switching timing of the display pattern in the liquid crystal display panel 2. Thereby, the viewer is allowed to view a parallax image displayed on the liquid crystal display panel 2 at a more stable timing. Moreover, in the switching liquid crystal panel 1, the period of the non-transmittance state is longer than the period of the transmittance state. Thereby, a displayed image is shielded in a transition period in which the displayed image is changed in the liquid crystal display panel 2 so as not to be viewed, thereby a stable stereoscopic image is allowed to be viewed. For example, a mixture of two parallax images is prevented from being viewed in the transition period. In addition, the timing controller 22 (refer to FIG. 2) performs timing control on the barrier pattern in response to a frame signal outputted from the parallax image data output section 23.

### Effect in first embodiment

In the first embodiment, the display pattern configured of the parallax images is periodically switched, and the barrier pattern is periodically switched in synchronization with switching the display pattern, so the parallax images which are spatially and temporally separated are displayed on the two-dimensional display section so that stereoscopic display is achievable. Thereby, compared to the case where the parallax images which are spatially separated from each other are displayed in one display pattern, a decline in resolution in stereoscopic display is preventable.

### Second Embodiment

Next, a stereoscopic display according to a second embodiment will be described below. In addition, like components are denoted by like numerals as of the stereoscopic display according to the first embodiment, and will not be further described.

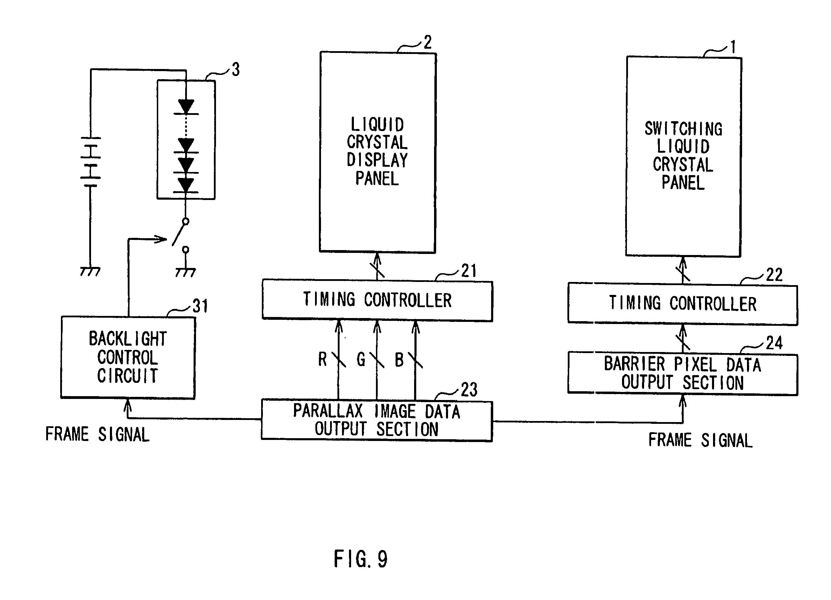

FIG. 9 illustrates a circuit responsible for display control in the stereoscopic display according to the embodiment. In the first embodiment, synchronization between the switching liquid crystal panel 1 and the liquid crystal display panel 2 is controlled. However, in the embodiment, the backlight control circuit 31 controls synchronization with ON/OFF operation of the backlight 3. As the backlight 3, a backlight of which ON/OFF states are switchable at high speed is used. For example, an LED (Light Emitting Diode) backlight is preferably used. In the embodiment, the timing controllers 21 and 22 and the backlight control circuit 31 correspond to specific examples of "a synchronization control section."

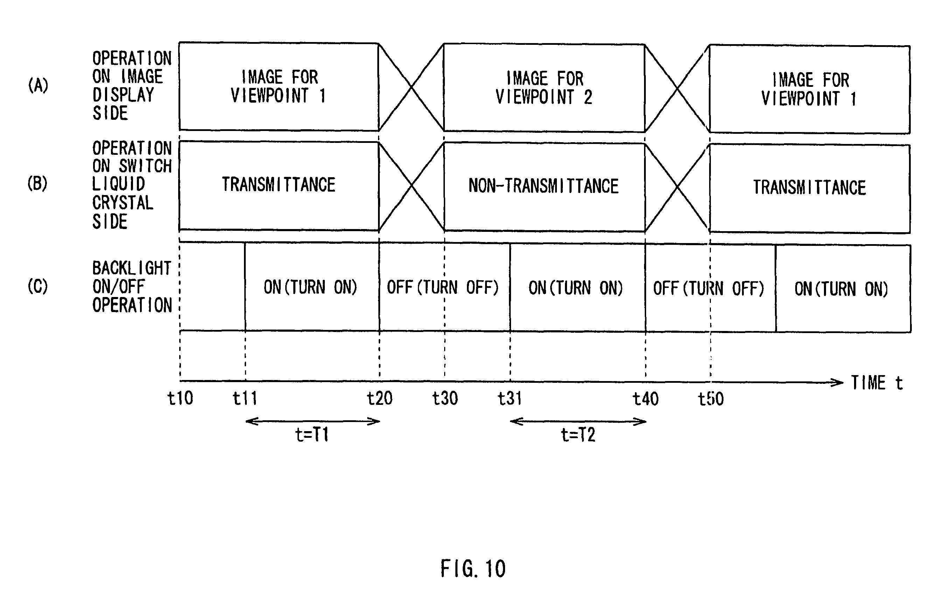

In the embodiment, synchronous control illustrated in parts A, B and C in FIG. 10 is performed instead of synchronous control in the parts A and B in FIG. 8. In the synchronous control in the parts A and B in FIG. 8, synchronous control is performed with delay so that the switching timing of the barrier pattern is delayed as compared to the switching timing of the display pattern in the liquid crystal display panel 2. Instead of this, in the embodiment, as illustrated in the part C in FIG. 10, synchronous control is performed with delay so that a turn-on timing of the backlight 3 is delayed as compared to the switching timing of the display pattern in the liquid crystal display panel 2. Such control is performed so as to control ON/OFF operation of illumination for the whole screen of the liquid crystal display panel 2. As illustrated in the parts A and B in FIG. 10, the timing of switching the display pattern in the liquid crystal display panel 2 and the timing of switching the barrier pattern in the switching liquid crystal panel 1 are synchronized.

Also in the embodiment, the display pattern in the liquid crystal display panel 2 is switched in the same manner as that in the part A in FIG. 8. More specifically, in the first pixel position, the image for the viewpoint 1 starts to be displayed at the time t10, but the image starts to be displayed with full stability from the time t11 which is behind the time t10 by a predetermined period due to the response speed of liquid crystal. As illustrated in part C in FIG. 10, synchronous control is performed so that the backlight 3 turns on at the time t11 at which the image is stably displayed. In the next period from the time t30 to the time t40, in the first pixel position, the image for the viewpoint 2 starts to be displayed, but also in this case, synchronous control is performed so that the backlight 3 turns on at a time t31 at which the image is stably displayed. At this time, in the first pixel position, the backlight 3 is controlled so as to turn off until stably changing (transiting) the displayed image from the image for the viewpoint 1 to the image for the viewpoint 2 (from the time t20 to the time t31). The backlight control circuit 31 controls such ON/OFF operation of the backlight 3 in response to a frame signal outputted from the parallax image data output section 23.

Also in the embodiment, the parallax images which are spatially and temporally separated are displayed on the two-dimensional display section so that stereoscopic display is achievable, so a decline in resolution in stereoscopic display is preventable. Moreover, the ON/OFF operation of the backlight 3 is controlled in synchronization with switching the display pattern, so the display image is shielded during a transition period in which the display pattern is switched in the liquid crystal display panel 2 so that the display image is not allowed to be viewed. Thereby, a stable stereoscopic image is allowed to be viewed. For example, a mixture of two parallax images is allowed to be prevented from being viewed during the transition period.

### Third Embodiment

Next, a stereoscopic display according to a third embodiment will be described below. In addition, like components are denoted by like numerals as of the stereoscopic displays according to the first and the second embodiments, and will not be further described.

In the above-described embodiments, binocular stereoscopic display is described as an example, but the present embodiments are applicable to the case where multi-view stereoscopic display is performed. In the case of multi-view stereoscopic display, a number n of parallax images corresponding to n=3 or more viewpoints which are combined into a one-screen image while maintaining such a state that the parallax images are equally separated from each other are displayed. For example, in the case where stereoscopic display from three viewpoints is provided, three parallax images which are combined into a one-screen image while maintaining such a state that the parallax images which are spatially separated from each other are displayed. In this case, as a display pattern in which the parallax images are spatially separated, m kinds (m is an integer of 2≤m≤n) of patterns are used. The parallax images are displayed while periodically switching the m kinds of display patterns from one to another. As a barrier pattern, m different kinds of patterns are used corresponding to the display patterns, and the m kinds of barrier patterns are periodically switched from one to another. Synchronization between a switching operation of the display pattern and a switching operation of the barrier pattern is controlled as in the case of binocular stereoscopic display. Thereby, in the case of the multi-view stereoscopic display, the parallax images which are separated spatially by n, and temporally by m are displayed.

The case of n=3 will be described as an example. On the liquid crystal display panel 2, pixels displaying a first parallax image are defined as (R1, G1, B1), and pixels displaying a second parallax image are defined as (R2, G2, B2) and pixels displaying a third parallax image are defined as (R3, G3, B3).

For example, in the case of n=3 and m=2, when a display pattern of red pixels R1, R2 and R3 of the parallax images is used as an example, in a first display period T1, the pixels R1, R2 and R3 are displayed in this order, and in a second display period T2, for example, the pixels R3, R1 and R2 are displayed in this order. In the switching liquid crystal panel 1, different barrier patterns are periodically switched from one to another in synchronization with switching these two display patterns so that stereoscopic display is achievable. Thereby, three parallax images which are separated spatially by three and temporally by two are displayed.

Moreover, for example, in the case of n=3 and m=3, in a third display period T3, the pixels R2, R3 and R1 are displayed in this order. In the switching liquid crystal panel 1, three different barrier patterns are periodically switched from one to another in synchronization with switching these three display patterns from one to another so that stereoscopic display is achievable. Thereby, three parallax images which are separated spatially by 3 and temporally by 3 are displayed.

Thus, in the case of multi-view stereoscopic display, the parallax images which are spatially and temporally separated are displayed on the two-dimensional display section. Thereby, also in the case of multi-view stereoscopic display, compared to the case where parallax images which are spatially separated are displayed in one display pattern, a decline in resolution in stereoscopic display is preventable.

In the above-described embodiments, the liquid crystal display panel 2 is used as a two-dimensional display section, but any other display panel may be used. For example, a self-luminous type display panel, for example, an organic EL (Electro-Luminescence) panel may be used. In the case where the other display panel is used, synchronous control to synchronize a switching timing of display pattern in the display panel and a switching timing of the barrier pattern may be appropriately adjusted according to a display response speed of the display panel and a switching response speed of the switching liquid crystal panel 1.

It should be understood that various changes and modifications to the presently preferred embodiments described herein will be apparent to those skilled in the art.

Further embodiments are:
1. A display device comprising:
   a two-dimensional display section configured to display parallax images for stereoscopic display;
   a variable parallax barrier configured to form a plurality of different barrier patterns, each barrier pattern having light transmitting portions and light blocking portions; and at least one timing controller for controlling a first switching operation in the two-dimensional display section and a second switching operation in the variable parallax barrier.
2. The display device according to item 1, wherein the at least one timing controller is configured to synchronize the first and second switching operations.
3. The display device according to item 1, wherein the two-dimensional display section has a pixel configuration including a plurality of sub-pixels, the plurality of sub-pixels emitting light of a plurality of different colors.
4. The display according to item 3, wherein a combination of sub-pixels of three different light emitting colors that are connected to one another in a longitudinal direction of the two-dimensional display section constitute a unit pixel.
5. The display according to item 3,
   wherein the pixel configuration includes a plurality of columns of sub-pixels arranged in a longitudinal direction of the two-dimensional display section, and a plurality of rows of sub-pixels arranged in a lateral direction of the two-dimensional display section, and
   wherein sub-pixels of multiple light emitting colors are periodically arranged in each column, and sub-pixels of a single light emitting color are arranged in each row.
6. The display according to item 1, wherein the two-dimensional display section is configured to combine a first set of two parallax images into a first screen image according to a first predetermined display pattern for viewing at a first position.
7. The display according to item 6, wherein the two-dimensional display section is configured to combine a second set of two parallax images into a second screen image according to a second predetermined display pattern for viewing at a second position that is different than the first position.
8. The display according to item 1,
   wherein the two-dimensional display section has a pixel configuration that includes a plurality of columns of pixels in a longitudinal direction of the two-dimensional display section,
   wherein a first display pattern includes alternating columns of pixels, and a second display pattern includes alternating columns of pixels other than the alternating columns of pixels in the first display pattern.
9. The display according to item 8, wherein during a given time period a first parallax image is displayed in the first display pattern, and a second parallax image is displayed in the second display pattern.
10. The display according to item 9, wherein during subsequent time periods the timing controller causes display of the first and second parallax images to periodically alternate between the first and second display patterns.
11. The display according to Claim 1, wherein the variable parallax barrier displays a barrier pattern for optically separating each of a plurality of parallax images displayed by the two-dimensional display section.
12. The display according to item 1, wherein the variable parallax barrier includes a plurality of pixels that are two-dimensionally arranged, and the variable parallax barrier is configured to switch at least a plurality of the pixels between a first at least substantially transparent state a second at least substantially opaque state.
13. The display according to item 8, wherein the variable parallax barrier switches between a first barrier pattern and a second barrier pattern,
   the first barrier pattern including a plurality of at least substantially transparent pixels that correspond to positions of the pixels in the first display pattern of the two-dimensional display section, and including a plurality of at least substantially opaque pixels that correspond to positions of the pixels in the second display pattern of the two-dimensional display section, and
   the second barrier pattern including a plurality of at least substantially opaque pixels that correspond to positions of the pixels in the first display pattern of the two-dimensional display section, and including a plurality of at least substantially transparent pixels that correspond to positions of the pixels in the second display pattern of the two-dimensional display section.
14. The display according to item 13,
   wherein during a given time period a first parallax image is displayed in the first display pattern, and a second parallax image is displayed in the second display pattern, and
   wherein during subsequent time periods the timing controller:
   (a) causes the first and second parallax images to periodically alternate between the first
      and second display patterns, and
   (b) causes the first and second barrier patterns to periodically alternate between the first and second barrier patterns in synchronization with the alternation of the first and second parallax images.
15. The display according to item 13,
   wherein the first barrier pattern is configured to optically separate light emitted from the two-dimensional display section to enable stereoscopic vision when parallax images in the first display pattern are displayed, and
   wherein the second barrier pattern is configured to optically separate the light emitted from the two-dimensional display section to enable stereoscopic vision when parallax images in the second display pattern are displayed.
16. The display according to item 13, wherein shapes and positions of the at least substantially transparent pixels in each of the first and second barrier patterns are set to enable light rays from a first parallax image of the two-dimensional display section to be directed to a first viewing position, and light rays from a second parallax image of the two-dimensional display section to be directed to a second viewing position that is different from the first viewing position.
17. The display according to item 8,
   wherein at a time of alternating first and second parallax images between the first and second display patterns, a frame signal is transmitted to the timing controller, and
   wherein the timing controller synchronizes a switching timing of first and second barrier patterns in the variable parallax barrier and a switching timing of the first and second display patterns in the two-dimensional display section based on the frame signal.
18. The display according to item 17, wherein the timing controller accounts for a difference in response speed between the variable parallax barrier and the two-dimensional display section.
19. The display according to item 18, wherein the timing controller controls a timing of forming a transparent barrier pattern in the variable parallax barrier to be delayed relative to a timing of displaying image data of each of the display patterns displayed on the two-dimensional display section.
20. A display device comprising:
   a liquid crystal display panel configured to display parallax images for stereoscopic display;
   a variable parallax barrier configured to form a plurality of different barrier patterns, each barrier pattern having light transmitting portions and light blocking portions;
   at least one timing controller for controlling a first switching operation in the liquid crystal display panel and a second switching operation in the variable parallax barrier; and
   a backlight configured to emit light through the liquid crystal display panel and the variable parallax barrier.
21. The display device according to item 20, wherein the at least one timing controller is configured to synchronize the first and second switching operations.
22. The display device according to item 20, wherein the liquid crystal display panel has a pixel configuration including a plurality of sub-pixels, the plurality of sub-pixels emitting light of a plurality of different colors.
23. The display according to item 22, wherein a combination of sub-pixels of three different light emitting colors that are connected to one another in a longitudinal direction of the liquid crystal display panel constitute a unit pixel.
24. The display according to item 22,
   wherein the pixel configuration includes a plurality of columns of sub-pixels arranged in a longitudinal direction of the liquid crystal display panel, and a plurality of rows of sub-pixels arranged in a lateral direction of the liquid crystal display panel, and
   wherein sub-pixels of multiple light emitting colors are periodically arranged in each column, and sub-pixels of a single light emitting color are arranged in each row.
25. The display according to item 20, wherein the liquid crystal display panel is configured to combine a first set of two parallax images into a first screen image according to a first predetermined display pattern for viewing at a first position.
26. The display according to item 25, wherein the liquid crystal display panel is configured to combine a second set of two parallax images into a second screen image according to a second predetermined display pattern for viewing at a second position that is different than the first position.
27. The display according to item 20,
   wherein the liquid crystal display panel has a pixel configuration that includes a plurality of columns of pixels in a longitudinal direction of the liquid crystal display panel,
   wherein a first display pattern includes alternating columns of pixels, and a second display pattern includes alternating columns of pixels other than the alternating columns of pixels in the first display pattern.
28. The display according to item 27, wherein during a given time period a first parallax image is displayed in the first display pattern, and a second parallax image is displayed in the second display pattern.
29. The display according to item 28, wherein during subsequent time periods the timing controller causes display of the first and second parallax images to periodically alternate between the first and second display patterns.
30. The display according to item 20, wherein the variable parallax barrier displays a barrier pattern for optically separating each of a plurality of parallax images displayed by the liquid crystal display panel.
31. The display according to item 20, wherein the variable parallax barrier includes a plurality of pixels that are two-dimensionally arranged, and the variable parallax barrier is configured to switch at least a plurality of the pixels between a first at least substantially transparent state a second at least substantially opaque state.
32. The display according to item 27, wherein the variable parallax barrier switches between a first barrier pattern and a second barrier pattern,
   the first barrier pattern including a plurality of at least substantially transparent pixels that correspond to positions of the pixels in the first display pattern of the liquid crystal display panel, and including a plurality of at least substantially opaque pixels that correspond to positions of the pixels in the second display pattern of the liquid crystal display panel, and
   the second barrier pattern including a plurality of at least substantially opaque pixels that correspond to positions of the pixels in the first display pattern of the liquid crystal display panel, and including a plurality of at least substantially transparent pixels that correspond to positions of the pixels in the second display pattern of the liquid crystal display panel.
33. The display according to item 32,
   wherein during a given time period a first parallax image is displayed in the first display pattern, and a second parallax image is displayed in the second display pattern, and
   wherein during subsequent time periods the timing controller:
   (a) causes display of the first and second parallax images to periodically alternate between the first and second display patterns, and
   (b) causes the first and second barrier patterns to periodically alternate between the first and second barrier patterns in synchronization with the alternation of the first and second parallax images.
34. The display according to item 32,
   wherein the first barrier pattern is configured to optically separate light emitted from the liquid crystal display panel to enable stereoscopic vision when parallax images in the first display pattern are displayed, and
   wherein the second barrier pattern is configured to optically separate the light emitted from the liquid crystal display panel to enable stereoscopic vision when parallax images in the second display pattern are displayed.
35. The display according to item 32, wherein shapes and positions of the at least substantially transparent pixels in each of the first and second barrier patterns are set to enable light rays from a first parallax image of the liquid crystal display panel to be directed to a first viewing position, and light rays from a second parallax image of the liquid crystal display panel to be directed to a second viewing position that is different from the first viewing position.
36. The display according to item 20,
   wherein at a time of alternating first and second parallax images between the first and second display patterns, a frame signal is transmitted to the timing controller, and
   wherein the timing controller synchronizes a switching timing of first and second barrier patterns in the variable parallax barrier and a switching timing of the first and second display patterns in the liquid crystal display panel based on the frame signal.
37. The display according to item 36, wherein the timing controller accounts for a difference in response speed between the variable parallax barrier and the liquid crystal display panel.
38. The display according to item 37, wherein the timing controller controls a timing of forming a transparent barrier pattern in the variable parallax barrier to be delayed relative to a timing of displaying image data of each of the display patterns displayed on the liquid crystal display panel.
39. The display according to item 20, wherein the backlight has switchable on/off states, and
   wherein the timing controller controls a timing of switching the backlight to an on state to be delayed relative to a timing of:
   (a) forming a transparent barrier pattern in the variable parallax barrier; and
   (b) displaying image data of each of the display patterns on the liquid crystal display panel.
40. A method of displaying a stereoscopic image, the method comprising:
   displaying parallax images for stereoscopic display with a two-dimensional display section;
   forming a plurality of different barrier patterns with a variable parallax barrier, each barrier pattern having light transmitting portions and light blocking portions; and
   controlling a first switching operation in the two-dimensional display section and a second switching operation in the variable parallax barrier.
41. A method of displaying a stereoscopic image according to item 40, including synchronizing the first and second switching operations.
42. A method of displaying a stereoscopic image according to item 40, further comprising combining a first set of two parallax images into a first screen image according to a first predetermined display pattern for viewing at a first position.
43. A method of displaying a stereoscopic image according to item 42, further comprising combining a second set of two parallax images into a second screen image according to a second predetermined display pattern for viewing at a second position that is different than the first position.
44. A method of displaying a stereoscopic image according to item 40,
   wherein the two-dimensional display section has a pixel configuration that includes a plurality of columns of pixels in a longitudinal direction of the two-dimensional display section,
   wherein a first display pattern includes alternating columns of pixels, and a second display pattern includes alternating columns of pixels other than the alternating columns of pixels in the first display pattern,
   the method further comprising displaying, during a given time period, a first parallax image in the first display pattern, and displaying a second parallax image in the second display pattern.
45. A method of displaying a stereoscopic image according to item 44, further comprising periodically alternating display of the first and second parallax images between the first and second display patterns during subsequent time periods.
46. A method of displaying a stereoscopic image according to item 40, further comprising displaying on the variable parallax barrier a barrier pattern for optically separating each of a plurality of parallax images displayed by the two-dimensional display section.
47. A method of displaying a stereoscopic image according to item 40, wherein the variable parallax barrier includes a plurality of pixels that are two-dimensionally arranged,
   the method further comprising switching at least a plurality of the pixels of the variable parallax barrier between a first at least substantially transparent state a second at least substantially opaque state.
48. A method of displaying a stereoscopic image according to item 44, further comprising switching the variable parallax barrier between a first barrier pattern and a second barrier pattern,
   wherein the first barrier pattern includes a plurality of at least substantially transparent pixels that correspond to positions of the pixels in the first display pattern of the two-dimensional display section, and including a plurality of at least substantially opaque pixels that correspond to positions of the pixels in the second display pattern of the two-dimensional display section, and
   wherein the second barrier pattern includes a plurality of at least substantially opaque pixels that correspond to positions of the pixels in the first display pattern of the two-dimensional display section, and including a plurality of at least substantially transparent pixels that correspond to positions of the pixels in the second display pattern of the two-dimensional display section.
49. A method of displaying a stereoscopic image according to item 48, further comprising:
   displaying, during a given time period, a first parallax image in the first display pattern, and a second parallax image in the second display pattern, and during subsequent time periods:
      (a) periodically alternating display of the first and second parallax images between the first and second display patterns, and
      (b) periodically alternating the first and second barrier patterns between the first and second barrier patterns in synchronization with the alternation of the first and second parallax images.
50. A method of displaying a stereoscopic image according to item 48, further comprising:
   optically separating, with the first barrier pattern, light emitted from the two-dimensional display section to enable stereoscopic vision when parallax images in the first display pattern are displayed, and
   optically separating, with the second barrier pattern, light emitted from the two-dimensional display section to enable stereoscopic vision when parallax images in the second display pattern are displayed.
51. A method of displaying a stereoscopic image according to item 48, further comprising:
   directing light rays from a first parallax image through the at least substantially transparent pixels of the first barrier pattern to a first viewing position, and
   directing light rays from a second parallax image through the at least substantially transparent pixels of the second barrier pattern to a second viewing position that is different from the first viewing position.
52. A method of displaying a stereoscopic image according to item 44, further comprising:
   transmitting a frame signal at a time of alternating first and second parallax images between first and second display patterns of the two-dimensional display section, and
   synchronizing a switching timing of first and second barrier patterns of the variable parallax barrier and a switching timing of the first and second display patterns of the two-dimensional display section based on the frame signal.
53. A method of displaying a stereoscopic image according to item 52, including performing the synchronous control to account for a difference in response speed between the variable parallax barrier and the two-dimensional display section.
54. A method of displaying a stereoscopic image according to item 53, including controlling a timing of forming a transparent barrier pattern in the variable parallax barrier to be delayed relative to a timing of displaying image data of each of the display patterns displayed on the two-dimensional display section.
55. A method of displaying a stereoscopic image, the method comprising:
   displaying parallax images for stereoscopic display with a liquid crystal display panel;
   forming a plurality of different barrier patterns with a variable parallax barrier, each barrier pattern having light transmitting portions and light blocking portions;
   controlling a first switching operation in the liquid crystal display panel and a second switching operation in the variable parallax barrier; and
   emitting light from a backlight through the liquid crystal display panel and the variable parallax barrier.
56. A method of displaying a stereoscopic image according to item 55, including synchronizing the first and second switching operations.
57. A method of displaying a stereoscopic image according to item 55, further comprising combining a first set of two parallax images into a first screen image according to a first predetermined display pattern for viewing at a first position.
58. A method of displaying a stereoscopic image according to item 57, further comprising combining a second set of two parallax images into a second screen image according to a second predetermined display pattern for viewing at a second position that is different than the first position.
59. A method of displaying a stereoscopic image according to item 55,
   wherein the liquid crystal display panel has a pixel configuration that includes a plurality of columns of pixels in a longitudinal direction of the liquid crystal display panel,
   wherein a first display pattern includes alternating columns of pixels, and a second display pattern includes alternating columns of pixels other than the alternating columns of pixels in the first display pattern,
   the method further comprising displaying, during a given time period, a first parallax image in the first display pattern, and displaying a second parallax image in the second display pattern.
60. A method of displaying a stereoscopic image according to item 59, further comprising periodically alternating display of the first and second parallax images between the first and second display patterns during subsequent time periods.
61. A method of displaying a stereoscopic image according to item 55, further comprising displaying on the variable parallax barrier a barrier pattern for optically separating each of a plurality of parallax images displayed by the liquid crystal display panel.
62. A method of displaying a stereoscopic image according to item 55, wherein the variable parallax barrier includes a plurality of pixels that are two-dimensionally arranged,
   the method further comprising switching at least a plurality of the pixels of the variable parallax barrier between a first at least substantially transparent state a second at least substantially opaque state.
63. A method of displaying a stereoscopic image according to item 59, further comprising switching the variable parallax barrier between a first barrier pattern and a second barrier pattern,
   wherein the first barrier pattern includes a plurality of at least substantially transparent pixels that correspond to positions of the pixels in the first display pattern of the liquid crystal display panel, and including a plurality of at least substantially opaque pixels that correspond to positions of the pixels in the second display pattern of the liquid crystal display panel, and
   wherein the second barrier pattern includes a plurality of at least substantially opaque pixels that correspond to positions of the pixels in the first display pattern of the liquid crystal display panel, and including a plurality of at least substantially transparent pixels that correspond to positions of the pixels in the second display pattern of the liquid crystal display panel.
64. A method of displaying a stereoscopic image according to item 63, further comprising:
   displaying, during a given time period, a first parallax image in the first display pattern, and a second parallax image in the second display pattern, and
   during subsequent time periods:
      (a) periodically alternating display of the first and second parallax images between the first and second display patterns, and
      (b) periodically alternating the first and second barrier patterns between the first and second barrier patterns in synchronization with the alternation of the first and second parallax images.
65. A method of displaying a stereoscopic image according to item 63, further comprising:
   optically separating, with the first barrier pattern, light emitted from the liquid crystal display panel to enable stereoscopic vision when parallax images in the first display pattern are displayed, and
   optically separating, with the second barrier pattern, light emitted from the liquid crystal display panel to enable stereoscopic vision when parallax images in the second display pattern are displayed.
66. A method of displaying a stereoscopic image according to item 63, further comprising:
   directing light rays from a first parallax image through the at least substantially transparent pixels of the first barrier pattern to a first viewing position, and directing light rays from a second parallax image through the at least substantially transparent pixels of the second barrier pattern to a second viewing position that is different from the first viewing position.
67. A method of displaying a stereoscopic image according to item 59, further comprising:
   transmitting a frame signal at a time of alternating first and second parallax images between first and second display patterns of the liquid crystal display panel, and
   synchronizing a switching timing of first and second barrier patterns of the variable parallax barrier and a switching timing of the first and second display patterns of the liquid crystal display panel section based on the frame signal.
68. A method of displaying a stereoscopic image according to item 67, including performing the synchronous control to account for a difference in response speed between the variable parallax barrier and the liquid crystal display panel.
69. A method of displaying a stereoscopic image according to item 68, including controlling a timing of forming a transparent barrier pattern in the variable parallax barrier to be delayed relative to a timing of displaying image data of each of the display patterns displayed on the liquid crystal display panel.
70. A method of displaying a stereoscopic image according to item 55, wherein the backlight has switchable on/off states, and
   the method further includes delaying a timing of switching the backlight to an on state relative to a timing of:
   (a) forming a transparent barrier pattern in the variable parallax barrier; and
   (b) displaying image data of each of the display patterns on the liquid crystal display panel.

## Claims

1. A display device comprising:
a two-dimensional display section configured to display parallax images for stereoscopic display:
a variable parallax barrier comprising a plurality of sections which are each settable as an opaque shielding section according to an opaque state or as a light-transmitting slit section according to a transmittance state configured to form a plurality of different barrier patterns, each barrier pattern having light transmitting portions and light blocking portions; and
at least one timing controller for controlling a first switching operation in the two-dimensional display section and a second switching operation in the variable parallax barrier, wherein the at least one timing controller is configured to synchronize the first and second switching operations which each other, and to control the second switching operation in such way that a period of the opaque state is longer than a period of the transmittance state,
wherein the two-dimensional display section has a pixel configuration that includes a plurality of columns of pixels in a longitudinal direction of the two-dimensional display section,
wherein a first display pattern includes columns of pixels, and a second display pattern includes columns of pixels other than the alternating columns of pixels of the first display pattern,
wherein at a time of alternating first and second parallax images between the first and second display patterns, a frame signal is transmitted to the timing controller, and
wherein the timing controller synchronizes a switching timing of first and second barrier patterns in the variable parallax barrier and a switching timing of the first and second display patterns in the two-dimensional display section based on the frame signal,
wherein the timing controller controls a timing of forming a transparent barrier pattern in the variable parallax barrier to be delayed relative to a timing of displaying image data of each of the display patterns displayed on the two-dimensional display section.

2. The display device according to claim 1, wherein the two-dimensional display section has a pixel configuration including a plurality of sub-pixels, the plurality of sub-pixels emitting light of a plurality of different colors.

3. The display according to Claim 2, wherein a combination of sub-pixels of three different light emitting colors that are connected to one another in a longitudinal direction of the two-dimensional display section constitute a unit pixel.

4. The display according to any of claims 2 or 3,
wherein the pixel configuration includes a plurality of columns of sub-pixels arranged in a longitudinal direction of the two-dimensional display section, and a plurality of rows of sub-pixels arranged in a lateral direction of the two-dimensional display section, and
wherein sub-pixels of multiple light emitting colors are periodically arranged in each column, and sub-pixels of a single light emitting color are arranged in each row.

5. The display according to any of claims 1 to 4, wherein the two-dimensional display section is configured to combine a first set of two parallax images into a first screen image according to a first predetermined display pattern for viewing at a first position.

6. The display according to Claim 5, wherein the two-dimensional display section is configured to combine a second set of two parallax images into a second screen image according to a second predetermined display pattern for viewing at a second position that is different than the first position.

7. The display according to Claim 1, wherein during a given time period a first parallax image is displayed in the first display pattern, and a second parallax image is displayed in the second display pattern.

8. The display according to Claim 7, wherein during subsequent time periods the timing controller causes display of the first and second parallax images to periodically alternate between the first and second display patterns.

9. The display according to any of claims 1, 7 or 8. wherein the variable parallax barrier displays a barrier pattern for optically separating each of a plurality of parallax images displayed by the two-dimensional display section.

10. The display according to any of claims 1, 7, 8 or 9, wherein the variable parallax barrier includes a plurality of pixels that are two-dimensionally arranged, and the variable parallax barrier is configured to switch at least a plurality of the pixels between a first at least substantially transparent state a second at least substantially opaque state.

11. The display according to any of claims 7 to 10, wherein the variable parallax barrier switches between a first barrier pattern and a second barrier pattern,
the first barrier pattern including a plurality of at least substantially transparent pixels that correspond to positions of the pixels in the first display pattern of the two-dimensional display section, and including a plurality of at least substantially opaque pixels that correspond to positions of the pixels in the second display pattern of the two-dimensional display section, and
the second barrier pattern including a plurality of at least substantially opaque pixels that correspond to positions of the pixels in the first display pattern of the two-dimensional display section, and including a plurality of at least substantially transparent pixels that correspond to positions of the pixels in the second display pattern of the two-dimensional display section.

12. The display according to claim 1 1,
wherein during a given time period a first parallax image is displayed in the first display pattern, and a second parallax image is displayed in the second display pattern, and
wherein during subsequent time periods the timing controller:
(a) causes the first and second parallax images to periodically alternate between the first and second display patterns, and
(b) causes the first and second barrier patterns to periodically alternate between the first and second barrier patterns in synchronization with the alternation of the first and second parallax images.

13. The display according to any of claims 11 or 12,
wherein the first barrier pattern is configured to optically separate light emitted from the two-dimensional display section to enable stereoscopic vision when parallax images in the first display pattern are displayed, and
wherein the second barrier pattern is configured to optically separate the light emitted from the two-dimensional display section to enable stereoscopic vision when parallax images in the second display pattern are displayed.

14. The display according to any of claims 11 to 13, wherein shapes and positions of the at least substantially transparent pixels in each of the first and second barrier patterns are set to enable light rays from a first parallax image of the two-dimensional display section to be directed to a first viewing position, and light rays from a second parallax image of the two-dimensional display section to be directed to a second viewing position that is different from the first viewing position.

15. The display according to claim 1, wherein the timing controller accounts for a difference in response speed between the variable parallax barrier and the two-dimensional display section.

16. A method of displaying a stereoscopic image, the method comprising:
displaying parallax images for stereoscopic display with a two-dimensional display section:
wherein the two-dimensional display section has a pixel configuration that includes a plurality of columns of pixels in a longitudinal direction of the two-dimensional display section,
wherein a first display pattern includes columns of pixels, and a second display pattern includes columns of pixels other than the alternating columns of pixels of the first display pattern.
Forming a plurality of different barrier patterns with a variable parallax barrier, comprising a plurality of sections which are each settable as an opaque shielding section according to an opaque state or as a light-transmitting slit section according to a transmittance state; and
controlling a first switching operation in the two-dimensional display section and a second switching operation in the variable parallax barrier,
synchronizing the first and second switching operations with each other, and
controlling the second switching operation in such way that a period of the opaque state is longer than a period of the transmittance state,
transmitting a frame signal to the timing controller at a time of alternating first and second parallax images between the first and second display patterns,
the timing controller synchronizing a switching timing of first and second barrier patterns in the variable parallax barrier and a switching timing of the first and second display patterns in the two-dimensional display section based on the frame signal,
the timing controller controlling a timing of forming a transparent barrier pattern in the variable parallax barrier to be delayed relative to a timing of displaying image data of each of the display patterns displayed on the two-dimensional display section.

## Patentansprüche

1. Anzeigeeinrichtung, umfassend:
einen zweidimensionalen Anzeigeteil, der dafür ausgelegt ist, Parallaxbilder für stereoskopische Anzeige anzuzeigen;
eine variable Parallaxbarriere, die mehrere Teile umfasst, die jeweils gemäß einem undurchlässigen Zustand als ein undurchlässiger Abschirmteil oder gemäß einem Durchlasszustand als ein lichtdurchlässiger Schlitzteil setzbar sind, die dafür ausgelegt sind, mehrere verschiedene Barrierenmuster zu bilden, wobei jedes Barrierenmuster lichtdurchlässige Teile und lichtblockierende Teile aufweist; und
mindestens eine Timing-Steuerung zum Steuern einer ersten Schaltoperation in dem zweidimensionalen Anzeigeteil und einer zweiten Schaltoperation in der variablen Parallaxbarriere, wobei die mindestens eine Timing-Steuerung dafür ausgelegt ist, die erste und zweite Schaltoperation miteinander zu synchronisieren und die zweite Schaltoperation dergestalt zu steuern, dass eine Periode des undurchlässigen Zustands länger als eine Periode des Durchlasszustands ist,
wobei der zweidimensionale Anzeigeteil eine Pixelkonfiguration aufweist, die mehrere Spalten von Pixeln in einer longitudinalen Richtung des zweidimensionalen Anzeigeteils aufweist,
wobei ein erstes Anzeigemuster Spalten von Pixeln umfasst und ein zweites Anzeigemuster Spalten von Pixeln umfasst, die von den abwechselnden Spalten von Pixeln des ersten Anzeigemusters verschieden sind,
wobei zu einem Zeitpunkt des Abwechselns von ersten und zweiten Parallaxbildern zwischen dem ersten und zweiten Anzeigemuster ein Rahmensignal zu der Timing-Steuerung gesendet wird, und
wobei die Timing-Steuerung ein Schalt-Timing von ersten und zweiten Barrierenmustern in der variablen Parallaxbarriere und ein Schalt-Timing der ersten und zweiten Anzeigemuster in dem zweidimensionalen Anzeigeteil auf der Basis des Rahmensignals synchronisiert,
wobei die Timing-Steuerung ein Timing des Bildens eines transparenten Barrierenmusters in der variablen Parallaxbarriere relativ zu einem Timing des Anzeigens von Bilddaten jedes der auf dem zweidimensionalen Anzeigeteil angezeigten Anzeigemuster verzögert steuert.

2. Anzeigeeinrichtung nach Anspruch 1, wobei der zweidimensionale Anzeigeteil eine Pixelkonfiguration aufweist, die mehrere Subpixel umfasst, wobei die mehreren Subpixel Licht von mehreren verschiedenen Farben emittieren.

3. Anzeige nach Anspruch 2, wobei eine Kombination von Subpixeln dreier verschiedener lichtemittierender Farben, die in einer longitudinalen Richtung des zweidimensionalen Anzeigeteils miteinander verbunden sind, ein Einheitspixel bildet.

4. Anzeige nach einem der Ansprüche 2 oder 3,
wobei die Pixelkonfiguration mehrere Spalten von Subpixeln, die in einer longitudinalen Richtung des zweidimensionalen Anzeigeteils angeordnet sind, und mehrere Zeilen von Subpixeln, die in einer lateralen Richtung des zweidimensionalen Anzeigeteils angeordnet sind, umfasst und
wobei Subpixel der mehreren lichtemittierenden Farben in jeder Spalte periodisch angeordnet sind und Subpixel einer einzelnen lichtemittierenden Farbe in jeder Zeile angeordnet sind.

5. Anzeige nach einem der Ansprüche 1 bis 4, wobei der zweidimensionale Anzeigeteil dafür ausgelegt ist, eine erste Menge von zwei Parallaxbildern gemäß einem ersten vorbestimmten Anzeigemuster zur Betrachtung an einer ersten Position zu einem ersten Bildschirmbild zu kombinieren.

6. Anzeige nach Anspruch 5, wobei der zweidimensionale Anzeigeteil dafür ausgelegt ist, eine zweite Menge von zwei Parallaxbildern gemäß einem zweiten vorbestimmten Anzeigemuster zur Betrachtung an einer zweiten Position, die von der ersten Position verschieden ist, zu einem zweiten Bildschirmbild zu kombinieren.

7. Anzeige nach Anspruch 1, wobei während eines gegebenen Zeitraums ein erstes Parallaxbild in dem ersten Anzeigemuster angezeigt wird und ein zweites Parallaxbild in dem zweiten Anzeigemuster angezeigt wird.

8. Anzeige nach Anspruch 7, wobei während nachfolgender Zeiträume die Timing-Steuerung bewirkt, dass die Anzeige der ersten und zweiten Parallaxbilder periodisch zwischen dem ersten und zweiten Anzeigemuster abwechselt.

9. Anzeige nach einem der Ansprüche 1, 7 oder 8, wobei die variable Parallaxbarriere ein Barrierenmuster zum optischen Trennen jedes der durch den zweidimensionalen Anzeigeteil angezeigten mehreren Parallaxbilder anzeigt.

10. Anzeige nach einem der Ansprüche 1, 7, 8 oder 9, wobei die variable Parallaxbarriere mehrere Pixel umfasst, die zweidimensional angeordnet sind, und die variable Parallaxbarriere dafür ausgelegt ist, mindestens mehrere der Pixel zwischen einem ersten mindestens im Wesentlichen transparenten Zustand und einem zweiten mindestens im Wesentlichen undurchlässigen Zustand umzuschalten.

11. Anzeige nach einem der Ansprüche 7 bis 10, wobei die variable Parallaxbarriere zwischen einem ersten Barrierenmuster und einem zweiten Barrierenmuster umschaltet,
das erste Barrierenmuster mehrere mindestens im Wesentlichen transparente Pixel umfasst, die Positionen der Pixel in dem ersten Anzeigemuster des zweidimensionalen Anzeigeteils entsprechen, und mehrere mindestens im Wesentlichen undurchsichtige Pixel, die Positionen der Pixel in dem zweiten Anzeigemuster des zweidimensionalen Anzeigeteils entsprechen, und
das zweite Barrierenmuster mehrere mindestens im Wesentlichen undurchlässige Pixel umfasst, die Positionen der Pixel in dem ersten Anzeigemuster des zweidimensionalen Anzeigeteils entsprechen, und mehrere mindestens im Wesentlichen transparente Pixel umfasst, die Positionen der Pixel in dem zweiten Anzeigemuster des zweidimensionalen Anzeigeteils entsprechen.

12. Anzeige nach Anspruch 11,
wobei während eines gegebenen Zeitraums ein erstes Parallaxbild in dem ersten Anzeigemuster angezeigt wird und ein zweites Parallaxbild in dem zweiten Anzeigemuster angezeigt wird und
wobei während nachfolgender Zeiträume die Timing-Steuerung
(a) bewirkt, dass sich die ersten und zweiten Parallaxbilder periodisch zwischen dem ersten und zweiten Anzeigemuster abwechseln und
(b) bewirkt, dass sich die ersten und zweiten Barrierenmuster periodisch synchron mit der Abwechslung der ersten und zweiten Parallaxbilder zwischen dem ersten und zweiten Barrierenmuster abwechseln.

13. Anzeige nach einem der Ansprüche 11 oder 12,
wobei das erste Barrierenmuster dafür ausgelegt ist, von dem zweidimensionalen Anzeigeteil emittiertes Licht optisch zu trennen, um stereoskopisches Sehen zu ermöglichen, wenn Parallaxbilder in dem ersten Anzeigemuster angezeigt werden, und
wobei das zweite Barrierenmuster dafür ausgelegt ist, das von dem zweidimensionalen Anzeigeteil emittierte Licht optisch zu trennen, um stereoskopisches Sehen zu ermöglichen, wenn Parallaxbilder in dem zweiten Anzeigemuster angezeigt werden.

14. Anzeige nach einem der Ansprüche 11 bis 13, wobei Formen und Positionen der mindestens im Wesentlichen transparenten Pixel jeweils in dem ersten und zweiten Barrierenmuster dafür eingerichtet sind, das Lenken von Lichtstrahlen von einem ersten Parallaxbild des zweidimensionalen Anzeigeteils zu einer ersten Betrachtungsposition zu ermöglichen und das Lenken von Lichtstrahlen von einem zweiten Parallaxbild des zweidimensionalen Anzeigeteils zu einer zweiten Betrachtungsposition, die von der ersten Betrachtungsposition verschieden ist, zu ermöglichen.

15. Anzeige nach Anspruch 1, wobei die Timing-Steuerung eine Ansprechgeschwindigkeitsdifferenz zwischen der variablen Parallaxbarriere und dem zweidimensionalen Anzeigeteil berücksichtigt.

16. Verfahren zum Anzeigen eines stereoskopischen Bildes, wobei das Verfahren Folgendes umfasst:
Anzeigen von Parallaxbildern für stereoskopische Anzeige mit einem zweidimensionalen Anzeigeteil;
wobei der zweidimensionale Anzeigeteil eine Pixelkonfiguration aufweist, die mehrere Spalten von Pixeln in einer longitudinalen Richtung des zweidimensionalen Anzeigeteils umfasst,
wobei ein erstes Anzeigemuster Spalten von Pixeln umfasst und ein zweites Anzeigemuster Spalten von Pixeln umfasst, die von den abwechselnden Spalten von Pixeln des ersten Anzeigemusters verschieden sind,
Bilden mehrerer verschiedener Barrierenmuster mit einer variablen Parallaxbarriere, die mehrere Teile umfasst, die jeweils gemäß einem undurchlässigen Zustand als ein undurchlässiger Abschirmteil oder gemäß einem Durchlasszustand als ein lichtdurchlässiger Schlitzteil setzbar sind; und
Steuern einer ersten Schaltoperation in dem zweidimensionalen Schaltteil und einer zweiten Schaltoperation in der variablen Parallaxbarriere,
Synchronisieren der ersten und der zweiten Schaltoperation und
Steuern der zweiten Schaltoperation dergestalt, dass eine Periode des undurchlässigen Zustands länger als eine Periode des Durchlasszustands ist,
Senden eines Rahmensignals zu der Timing-Steuerung zu einem Zeitpunkt des Abwechselns von ersten und zweiten Parallaxbildern zwischen dem ersten und zweiten Anzeigemuster,
wobei die Timing-Steuerung ein Schalt-Timing von ersten und zweiten Barrierenmustern in der variablen Parallaxbarriere und ein Schalt-Timing der ersten und zweiten Anzeigemuster in dem zweidimensionalen Anzeigeteil auf der Basis des Rahmensignals synchronisiert,
wobei die Timing-Steuerung ein Timing des Bildens eines transparenten Barrierenmusters in der variablen Parallaxbarriere relativ zu einem Timing des Anzeigens von Bilddaten jedes der auf dem zweidimensionalen Anzeigeteil angezeigten Anzeigemuster verzögert steuert.

## Revendications

1. Dispositif d'affichage comprenant :
une section d'affichage bidimensionnelle configurée pour afficher des images de parallaxe pour un affichage stéréoscopique ;
une barrière de parallaxe variable comprenant une pluralité de sections dont chacune est réglable en tant que section d'occultation opaque conformément à un état opaque ou en tant que section à fente transmettant la lumière conformément à un état de transmittance configuré pour former une pluralité de motifs de barrière différents, chaque motif de barrière ayant des parties transmettant la lumière et des parties occultant la lumière ; et
au moins une unité de commande de cadencement pour commander une première opération de basculement dans la section d'affichage bidimensionnelle et une seconde opération de basculement dans la barrière de parallaxe variable, l'au moins une unité de commande de cadencement étant configurée pour synchroniser les première et seconde opérations de basculement l'une avec l'autre et pour commander la seconde opération de basculement de telle manière qu'une période de l'état opaque soit supérieure à une période de l'état de transmittance,
la section d'affichage bidimensionnelle ayant une configuration de pixels qui comprend une pluralité de colonnes de pixels dans une direction longitudinale de la section d'affichage bidimensionnelle,
un premier motif d'affichage comprenant des colonnes de pixels et un second motif d'affichage comprenant des colonnes de pixels autres que les colonnes alternées de pixels du premier motif d'affichage,
à un instant d'alternance des première et seconde images de parallaxe entre les premier et second motifs d'affichage, un signal de trame étant transmis à l'unité de commande de cadencement, et
l'unité de commande de cadencement synchronisant des instants de basculement de premier et second motifs de barrières dans la barrière de parallaxe variable et un instant de basculement des premier et second motifs d'affichage dans la section d'affichage bidimensionnelle sur la base du signal de trame,
l'unité de commande de cadencement commandant un instant de formation d'un motif de barrière transparent dans la barrière de parallaxe variable afin de le retarder par rapport à un instant d'affichage de données d'image de chacun des motifs d'affichage affichés sur la section d'affichage bidimensionnelle.

2. Dispositif d'affichage selon la revendication 1, dans lequel la section d'affichage bidimensionnelle a une configuration de pixels comprenant une pluralité de sous-pixels, la pluralité de sous-pixels émettant de la lumière d'une pluralité de couleurs différentes.

3. Dispositif d'affichage selon la revendication 2, dans lequel une combinaison de sous-pixels de trois couleurs d'émission lumineuse différentes qui sont connectés les uns aux autres dans une direction longitudinale de la section d'affichage bidimensionnelle constitue un pixel unité.

4. Dispositif d'affichage selon l'une quelconque des revendications 2 ou 3,
dans lequel la configuration de pixels comprend une pluralité de colonnes de sous-pixels agencées dans une direction longitudinale de la section d'affichage bidimensionnelle, et une pluralité de lignes de sous-pixels agencées dans une direction latérale de la section d'affichage bidimensionnelle, et
dans lequel des sous-pixels de couleurs d'émission lumineuse multiples sont agencés périodiquement dans chaque colonne et des sous-pixels d'une couleur d'émission lumineuse unique sont agencés dans chaque ligne.

5. Dispositif d'affichage selon l'une quelconque des revendications 1 à 4,
dans lequel la section d'affichage bidimensionnelle est configurée pour combiner un premier ensemble de deux images de parallaxe en une première image d'écran conformément à un premier motif d'affichage prédéterminé pour sa visualisation à une première position.

6. Dispositif d'affichage selon la revendication 5, dans lequel la section d'affichage bidimensionnelle est configurée pour combiner un second ensemble de deux images de parallaxe en une seconde image d'écran conformément à un second motif d'affichage prédéterminé pour sa visualisation à une seconde position qui est différente de la première position.

7. Dispositif d'affichage selon la revendication 1, dans lequel, pendant une période de temps donnée, une première image de parallaxe est affichée selon le premier motif d'affichage, et une seconde image de parallaxe est affichée selon le second motif d'affichage.

8. Dispositif d'affichage selon la revendication 7, dans lequel, pendant des périodes de temps suivantes, l'unité de commande de cadencement provoque l'alternance périodique de l'affichage des première et seconde images de parallaxe entre les premier et second motifs d'affichage.

9. Dispositif d'affichage selon l'une quelconque des revendications 1, 7 ou 8, dans lequel la barrière de parallaxe variable affiche un motif de barrière permettant de séparer optiquement chacune d'une pluralité d'images de parallaxe affichées par la section d'affichage bidimensionnelle.

10. Dispositif d'affichage selon l'une quelconque des revendications 1, 7, 8 ou 9, dans lequel la barrière de parallaxe variable comprend une pluralité de pixels qui sont agencés de manière bidimensionnelle, et la barrière de parallaxe variable est configurée pour faire basculer au moins une pluralité des pixels entre un premier état au moins sensiblement transparent et un second état au moins sensiblement opaque.

11. Dispositif d'affichage selon l'une quelconque des revendications 7 à 10, dans lequel la barrière de parallaxe variable bascule entre un premier motif de barrière et un second motif de barrière,
le premier motif de barrière comprenant une pluralité de pixels au moins sensiblement transparents qui correspondent à des positions des pixels dans le premier motif d'affichage de la section d'affichage bidimensionnelle, et comprenant une pluralité de pixels au moins sensiblement opaques qui correspondent à des positions des pixels dans le second motif d'affichage de la section d'affichage bidimensionnelle, et
le second motif de barrière comprenant une pluralité de pixels au moins sensiblement opaques qui correspondent à des positions des pixels dans le premier motif d'affichage de la section d'affichage bidimensionnelle, et comprenant une pluralité de pixels au moins sensiblement transparents qui correspondent à des positions des pixels dans le second motif d'affichage de la section d'affichage bidimensionnelle.

12. Dispositif d'affichage selon la revendication 11, dans lequel, pendant une période de temps donnée, une première image de parallaxe est affichée selon le premier motif d'affichage et une second image de parallaxe est affichée selon le second motif d'affichage, et
dans lequel, pendant les périodes de temps suivantes, l'unité de commande de cadencement :
(a) fait en sorte que les première et seconde images de parallaxe alternent périodiquement entre les premier et second motifs d'affichage, et
(b) fait en sorte que les premier et second motifs de barrière alternent périodiquement entre les premier et second motifs de barrière en synchronisme avec l'alternance entre les première et seconde images de parallaxe.

13. Dispositif d'affichage selon l'une quelconque des revendications 11 ou 12,
dans lequel le premier motif de barrière est configuré pour séparer optiquement la lumière émise par la section d'affichage bidimensionnelle pour permettre une vision stéréoscopique lorsque des images de parallaxe du premier motif d'affichage sont affichées, et
dans lequel le second motif de barrière est configuré pour séparer optiquement la lumière émise par la section d'affichage bidimensionnelle pour permettre une vision stéréoscopique lorsque des images de parallaxe du second motif d'affichage sont affichées.

14. Dispositif d'affichage selon l'une quelconque des revendications 11 à 13, dans lequel les formes et les positions des pixels au moins sensiblement transparents de chacun des premier et second motifs de barrières sont réglées pour permettre à des rayons lumineux provenant d'une première image de parallaxe de la section d'affichage bidimensionnelle d'être dirigés vers une première position de visualisation, et à des rayons lumineux provenant d'une seconde image de parallaxe de la section d'affichage bidimensionnelle d'être dirigés vers une seconde position de visualisation qui est différente de la première position de visualisation.

15. Dispositif d'affichage selon la revendication 1, dans lequel l'unité de commande de cadencement tient compte d'une différence de vitesse de réponse entre la barrière de parallaxe variable et la section d'affichage bidimensionnelle.

16. Procédé d'affichage d'une image stéréoscopique, le procédé comprenant :
l'affichage d'images de parallaxe pour l'affichage stéréoscopique au moyen d'une section d'affichage bidimensionnelle ;
la section d'affichage bidimensionnelle ayant une configuration de pixels qui comprend une pluralité de colonnes de pixels dans une direction longitudinale de la section d'affichage bidimensionnelle,
un premier motif d'affichage comprenant des colonnes de pixels et un second motif d'affichage comprenant des colonnes de pixels autres que les colonnes alternées de pixels du premier motif d'affichage,
la formation d'une pluralité de motifs de barrière différents avec une barrière de parallaxe variable, comprenant une pluralité de sections dont chacune peut être réglée en tant que section d'occultation opaque conformément à un état opaque ou en tant que section d'affichage transmettant la lumière conformément à un état de transmittance ; et
la commande d'une première opération de basculement dans la section d'affichage bidimensionnelle et d'une seconde opération de basculement dans la barrière de parallaxe variable,
la synchronisation des première et seconde opérations de basculement l'une avec l'autre, et
la commande de la seconde opération de basculement de manière à ce qu'une période de l'état opaque soit plus longue qu'une période de l'état de transmittance,
la transmission d'un signal de trame à l'unité de commande de cadencement à un instant d'alternance des première et seconde images de parallaxe entre les premier et second motifs d'affichage,
la synchronisation par l'unité de commande de cadencement d'un instant de basculement des premier et second motifs de barrière dans la barrière de parallaxe variable et d'un instant de basculement des premier et second motifs d'affichage dans la section d'affichage bidimensionnelle sur la base du signal de trame,
la commande par l'unité de commande de cadencement d'un instant de formation d'un motif de barrière transparent dans la barrière de parallaxe variable afin qu'il soit retardé par rapport à un instant d'affichage de données d'image de chacun des motifs d'affichage affichés sur la section d'affichage bidimensionnelle.
